(19) Europäisches Patentamt

European Patent Office

Office européen des brevets

(11) **EP 1 580 215 B1**

(12) **EUROPÄISCHE PATENTSCHRIFT**

(45) Veröffentlichungstag und Bekanntmachung des Hinweises auf die Patenterteilung:
**04.10.2006 Patentblatt 2006/40**

(51) Int Cl.:
***C08G 77/26*** (2006.01)   ***C08G 77/08*** (2006.01)
***C08G 77/32*** (2006.01)

(21) Anmeldenummer: **05102050.1**

(22) Anmeldetag: **16.03.2005**

(54) **Verfahren zur Herstellung von aminofunktionellen Organopolysiloxanen**

Process for the preparation of aminofunctional organopolysiloxanes

Procédé de préparation d'organopolysiloxanes aminofonctionnels

(84) Benannte Vertragsstaaten:
**BE DE FR GB NL**

(30) Priorität: **23.03.2004 DE 102004014218**

(43) Veröffentlichungstag der Anmeldung:
**28.09.2005 Patentblatt 2005/39**

(73) Patentinhaber: **Wacker Chemie AG**
**81737 München (DE)**

(72) Erfinder:
• **Heller, Anton**
**84359, Simbach (DE)**

• **Bindl, Johann**
**84489, Burghausen (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A- 0 742 263       EP-A- 0 757 074**
**EP-A- 1 096 059       WO-A-03/016380**
**US-A- 4 177 200       US-A- 5 041 586**
**US-A- 5 118 724**

## Beschreibung

Die Erfindung betrifft ein Verfahren zur Herstellung von aminofunktionellen Organopolysiloxanen.

Die Herstellung von aminofunktionellen Organopolysiloxanen über die alkalisch katalysierte Equilibrierung ist in vielen Veröffentlichungen beschrieben und Stand der Technik. So sind Katalysatoren wie Alkali-, Ammonium-, Phosphoniumhydroxiden oder -sil(ox)anolaten z. B. aus J. Polym. Sci., Part C No. 16, 669 - 677 (1967); Makromol. Chem., Macromol. Symp. 6, 67 - 80 (1986); und Polym.Prepr. 29 (1), 123 - 125 (1988) bekannt.

In EP 628589 B1 wird die Verwendung von Strontium- oder Bariumhydroxid zusammen mit Natriumboraten oder -phosphaten beschrieben.

Metallhydroxide bringen den Nachteil mit sich, dass sie in den dort beschriebenen Verfahren am Ende der Reaktion zur Deaktivierung mit Säuren neutralisiert werden müssen. Dies führt zu unerwünschten Trübungen und salzartigen Ausfällungen. Ammonium- und Phosphoniumhydroxide können ohne Säurezusatz thermisch zerstört, und deren Fragmente destillativ entfernt werden. Somit können klare Aminöle hergestellt werden. Dieses Verfahren ist aber energetisch und in der Herstellungsdauer aufwändiger. Die so hergestellten Öle haben zudem ein hohes Geruchsniveau bedingt durch Reste von Trialkylaminen.

In US 5,041,586 wird die Herstellung von Diorganopolysiloxanen unter Verwendung alkalischer Katalysatoren durch Erhitzen bei hohen Temperaturen und die Neutralistion des alkalischen Katalysators durch die Verwendung von Trimethylsilylphosphaten beschriebenen. Es wird eine spezifische Mischung von Trimethylsilylphosphaten folgender Zusammensetzung eingesetzt:

<div align="center">

10 - 30    Gew-% Mono-(trimethylsilyl)-phosphat,

65 - 85    Gew-% Bis-(trimethylsilyl)-phosphat und

2 - 7    Gew-% Tris-(trimethylsilyl)-phosphat.

</div>

Weiterhin haben Equilibrierungsreaktionen den Nachteil einer hohen Entstehungsrate an cyclischen Oligosiloxanen, wie Octamethyltetrasiloxan und Decamethylpentasiloxan in Mengen von 10 - 15 Gew-%, die dann wiederum je nach Anwendungsbereich destillativ entfernt werden müssen.

WO 03/016380 A2 offenbart die sauer katalysierte Herstellung eines aminofunktionellen Polysiloxans (A) durch Umsetzung eines Aminosilans, das eine Aminoalkylgruppe und mindestens eine siliciumgebundenen Alkoxygruppe aufweist, mit einer Carbonsäure und silanolfunktionellem Polysiloxan (B). Das Aminosilan liegt dabei teilweise in Form des Carboxylatsalzes vor, welches für eine Polykondensation zwischen (A) und (B) katalytisch wirkt. Nach dieser Methode hergestellte Aminöle haben einen sehr geringen Nebenproduktanteil an cyclischen Oligosiloxanen, jedoch sind die hergestellten Produkte gelblich gefärbt und zeigen auch unzureichende Lagerstabilitäten in der Viskosität.

Aufgabe der Erfindung ist es, ein kostengünstiges Verfahren zur Herstellung von aminofunktionellen Organopolysiloxanen bereitzustellen, bei dem ohne energie- und zeitaufwändige Aufarbeitungsverfahren, wie thermische Nachbehandlung oder Filtration, farblose, geruchsarme und viskositätsstabile Produkte mit einem möglichst geringem Gehalt an Cyclen, wie Cyclooctamethyltetrasiloxan (D4), erhalten werden.

Die Aufgabe wird durch die Erfindung gelöst.

Gegenstand der Erfindung ist ein Verfahren zur Herstellung von aminofunktionellen Organopolysiloxanen enthaltend

(i)    Vermischen von Aminosilanen (A) der allgemeinen Formel

$$R_a Q_b Si(OR^1)_{4-(a+b)} \qquad (I),$$

wobei R gleich oder verschieden sein kann, und ein Wasserstoffatom oder einen einwertigen, gegebenenfalls Fluor-, Chlor- oder Brom-substituierten $C_1$- bis $C_{18}$-Kohlenwasserstoffrest bedeutet,

$R^1$ ein Wasserstoffatom oder einen $C_1$- bis $C_4$-Alkylrest, der durch ein Ethersauerstoffatom substituiert sein kann, bedeutet,

a 0, 1 oder 2, vorzugsweise 0 oder 1,

b 1, 2 oder 3, vorzugsweise 1, mit der Maßgabe, dass die Summe aus a+b < 3 ist,

Q bedeutet eine Gruppe der allgemeinen Formel

$$-R^5-[NR^6(CH_2)_n]_e N(R^6)_2 \qquad (II),$$

wobei $R^5$ einen zweiwertigen, linearen oder verzweigten $C_1$- bis $C_{18}$-Kohlenwasserstoffrest bedeutet, $R^6$ gleich oder verschieden sein kann, und ein Wasserstoffatom, einen gegebenenfalls Fluor-, Chlor-, Brom-, Hydroxy- oder

$C_1$- bis $C_5$-alkoxysubstituierten $C_1$-bis $C_{18}$-Kohlenwasserstoffrest oder Acylrest bedeutet,

e 0, 1, 2, 3 oder 4,

n 2, 3, 4, 5 oder 6 ist,mit Organosiliciumverbindungen (B) ausgewählt aus der Gruppe von Siloxanen (B') aus Einheiten der allgemeinen Formel

$$R_d(OR^1)_f SiO_{\frac{4-(d+f)}{2}} \quad (III) \; und$$

und

$$R_c SiO_{\frac{4-c}{2}} \quad (IV)$$

und Silanen (B") der allgemeinen Formel

$$R_c Si(OR^1)_{4-c} \quad (V),$$

wobei R und $R^1$ die oben dafür angegebene Bedeutung haben,

c 0, 1, 2, oder 3, vorzugsweise 2,

d 0, 1 oder 2, vorzugsweise 2,

f 1, 2, oder 3, vorzugsweise 1,mit der Maßgabe, dass die Summe aus $d+f \leq 3$ ist,

basischen Katalysatoren (C) ausgewählt aus der Gruppe von Natriumhydroxid, Natriummethanolat, Natriummethanolat und Natriumsilanolat,

und gegebenenfalls Alkoholen (D) der allgemeinen Formel

$$H\text{-}[O(CHR^2)_p]_m OR^3 \quad (VI),$$

wobei $R^2$ gleich oder verschieden sein kann, und ein Wasserstoffatom oder einen $C_1$- bis $C_{18}$-Kohlenwasser-stoffrest bedeutet,

$R^3$ ein Wasserstoffatom, einen $C_1$- bis $C_{30}$-Kohlenwasserstoffrest, vorzugsweise einen $C_6$- bis $C_{14}$-Kohlenwas-serstoffrest, bevorzugt einen $C_{10}$- bis $C_{12}$-Kohlenwasserstoffrest oder eine Gruppe der allgemeinen Formel - $(C=O)\text{-}R^4$, wobei $R^4$ ein Rest $R^2$ oder $O\text{-}R^2$ ist, bedeutet,

p 2, 3 oder 4, und

m 0 oder eine ganze Zahl von 1 bis 100 ist,

(ii) Umsetzung der Mischung durch Erhitzen auf 70 bis 100°C, vorzugsweise 70 bis 90°C, wobei bei Mitverwendung von Alkoholen (D) die Umsetzung (ii) bei einem Druck von 1 bis 200 hPa und ohne Mitverwendung von Alkoholen (D) die Umsetzung (ii) bei einem Druck von 300 bis 700 hPa durchgeführt wird, und

(iii) anschließend an die Umsetzung (ii) Neutralisation der basischen Katalysatoren durch Zugabe von Neutralisationsmittel, die mit den basischen Katalysatoren Salze bilden, die in den so erhaltenen aminofunktionellen Organopolysiloxanen löslich sind.

Nach dem erfindungsgemäßen Verfahren werden aminofunktionelle Organopolysiloxane enthaltend Siloxaneinheiten der allgemeinen Formel

$$R_a Q_b SiO_{\frac{4-(a+b)}{2}} \quad (VII) \; ,$$

Siloxaneinheiten der allgemeinen Formel

$$R_c SiO_{\frac{4-c}{2}} \quad (VIII) \; ,$$

und Siloxaneinheiten der allgemeinen Formel

$$Z_g R_d SiO_{\frac{4-(d+g)}{2}} \qquad (IX) \quad ,$$

wobei Q einen Rest der allgemeinen Formel

$$—R^5—[NR^6(CH_2)_n]_e N(R^6)_2 \qquad (II)$$

und

Z einen Rest der allgemeinen Formel

$$-OR^1 \qquad (X)$$

und/oder

$$-[O(CHR^2)_p]_m OR^3 \qquad (X'),$$

bedeuten und

R, R , R , $R^3$, $R^5$, $R^6$, a, b, c, d, e, m, n und p die oben dafür angegebene Bedeutung haben und g 1, 2 oder 3, vorzugsweise 1, ist,

mit der Maßgabe, dass die Summe von a+b < 3 und dass die Summe von d+g $\leq$ 3 ist, erhalten.

Der Begriff Organopolysiloxane soll im Rahmen der vorliegenden Erfindung sowohl polymere als auch dimere und oligomere Siloxane umfassen.

Werden bei dem erfindungsgemäßen Verfahren keine Alkohole (D) eingesetzt, ist bei den erfindungsgemäßen aminofunktionellen Organopolysiloxanen der Rest Z ein Rest der Formel (X).

Werden bei dem erfindungsgemäßen Verfahren Alkohole (D) eingesetzt, sind mindestens ein Teil der Reste Z (Iso-) Oxyalkylreste der Formel (X') neben Resten der Formel (X).

Werden bei dem erfindungsgemäßen Verfahren keine Alkohole (D) eingesetzt, wird die Umsetzung (ii) bei einem Druck von vorzugsweise 400 bis 600 hPa durchgeführt.

Beispiele für Kohlenwasserstoffreste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$-und der $\beta$-Phenylethylrest.

Die Kohlenwasserstoffreste R enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste R mit aliphatischer Doppelbindung sind der Vinyl-, Allyl-, und 5-Hexen-1-ylrest. Vorzugsweise enthalten jedoch höchstens 1% der Kohlenwasserstoffreste R eine Doppelbindung.

Beispiele für substituierte Reste R sind Halogenalkylreste, wie der 3,3,3-Trifluor-n-propylrest, der 2,2,2',2',2'-Hexafluorisopropylrest, der Heptafluorisopropylrest und Halogenarylreste, wie der o-, m- und p-Chlorphenylrest.

Bevorzugt handelt es sich bei dem Rest R um einen einwertigen Kohlenwasserstoffrest mit 1 bis 6 Kohlenstoffatomen, wobei der Methylrest besonders bevorzugt ist.

Beispiele für Kohlenwasserstoffreste $R^1$ sind Alkylreste, wie der Methyl-, Ethyl-, n-Propyl-, iso-Propyl-, 1-n-Butyl-, 2-n-Butyl-, iso-Butyl- und tert.-Butylrest, wobei $C_1$-$C_3$-Alkylreste bevorzugt sind.

Beispiele für durch ein Ethersauerstoff substituierte Alkylreste sind der Methoxyethyl- und der Ethoxyethylrest. Bevorzugte Beispiele für den Rest -$OR^1$ sind der Hydroxy- und Methoxyrest.

Vorzugsweise ist $R^5$ ein zweiwertiger $C_2$-$C_6$-Kohlenwasserstoffrest.

Beispiele für zweiwertige Kohlenwasserstoffreste $R^5$ sind gesättige gerad- oder verzweigtkettige oder cyclische Alkylenreste wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste wie der Hexenylenrest und Phenylenreste, wobei der n-Propylenrest und der 2-Methylpropylenrest besonders bevorzugt sind.

Beispiele für Kohlenwasserstoffreste R, ausgenommen solche mit aliphatischer Doppelbindung, gelten in vollem Umfang für Kohlenwasserstoffreste $R^6$. Vorzugsweise ist $R^6$ ein Wasserstoffatom, ein Methylrest, ein Cyclohexylrest, oder ein Acylrest, wie der Acetylrest.

Bevorzugte Beispiele für Q sind

$H_2N(CH_2)_3 -$

$H_2N(CH_2)_2NH(CH_2)_3-$

$H_2N(CH_2)_2NH(CH_2)CH(CH_3)CH_2-$

$(Cyclohexyl)NH(CH_2)_3-$

$CH_3NH(CH_2)_3-$

$(CH_3)_2N(CH_2)_3-$

$CH_3CH_2NH(CH_2)_3-$

$(CH_3CH_2)_2N(CH_2)_3-$

$CH_3NH(CH_2)_2NH(CH_2)_3-$

$(CH_3)_2N(CH_2)NH(CH_2)_3-$

$CH_3CH_2NH(CH_2)_2NH(CH_2)_3-$

$(CH_3CH_2)_2N(CH_2)_2NH(CH_2)_3-$

und deren teil- oder vollacetylierten Formen.
Besonders bevorzugte Beispiele für Q sind:

$H_2N(CH_2)_3-$

$H_2N(CH_2)_2NH(CH_2)_3-$

$(Cyclohexyl)NH(CH_2)_3-$

$(Acetyl)-NH(CH_2)_2NH(CH_2)_3-$

$(Acetyl)-NH (CH_2)_2N(Acetyl)(CH_2)_3-$

Vorzugsweise ist in Formel (I) a = 0 oder 1 und b = 1, bevorzugt ist a = 1.
Bevorzugte Beispiele für Aminosilane (A) sind

$NH_2(CH_2)_2NH(CH_2)_3SiCH_3(OCH_3)_2$

$NH_2(CH_2)_2NH(CH_2)_3Si(OCH_3)_3$

$NH_2(CH_2)_3SiCH_3(OC_2H_5)_2$

Beispiele für Kohlenwasserstoffreste R, ausgenommen solche mit aliphatischer Doppelbindung, gelten im vollen Umfang für Kohlenwasserstoffreste $R^2$ und $R^3$.
Vorzugsweise ist $R^2$ ein Wasserstoffatom oder ein $C_1$-$C_{18}$-Alkylrest. Vorzugsweise ist $R^3$ ein Wasserstoffatom oder ein $C_1$-$C_{30}$-Alkylrest, bevorzugt ein $C_6$-$C_{14}$-Alkylrest, besonders bevorzugt ein $C_{10}$-$C_{12}$-Alkylrest.
Vorzugsweise werden bei dem erfindungsgemäßen Verfahren als Organosiliciumverbindungen (B) Siloxane (B') eingesetzt.
Die Siloxane (B') können linear, verzweigt oder cyclisch sein.
Bevorzugt werden als Siloxane (B') solche der allgemeinen Formel

$$R^1OR_2SiO(R_2SiO)_xSiR_2OR^1 \qquad (XI)$$

wobei R die oben dafür angegebene Bedeutung hat,

$R^1$ die oben dafür angegebene Bedeutung hat, bevorzugt ein Wasserstoffatom ist,

x eine ganze Zahl von 20 bis 100 bedeutet, eingesetzt.

Innerhalb bzw. entlang der Siloxankette der Siloxane der oben angegebenen Formel können, was durch derartige Formeln üblicherweise nicht dargestellt wird, zusätzlich zu den Diorganosiloxaneinheiten $R_2SiO$ noch andere Siloxaneinheiten vorliegen. Beispiele für solche anderen, meist nur als Verunreinigung vorliegenden Siloxaneinheiten sind solche der Formeln $RSiO_{3/2}$, $R_3SiO_{1/2}$ und $SiO_2$, wobei R die oben dafür angegebene Bedeutung hat.

Es kann eine Art von Siloxan (B') oder mehrere Arten von Siloxanen (B') eingesetzt werden.

Die Siloxane (B') weisen eine Viskosität von vorzugsweise 10 bis 1000 mPa.s bei 25°C, bevorzugt 30 bis 200 mPa.s bei 25°C auf.

Bei dem erfindungsgemäßen Verfahren werden Aminosilane (A) vorzugsweise in Mengen von 0,1 bis 20 Gew. %, bevorzugt 0,3 bis 12 Gew.% bezogen auf das Gesamtgewicht der Organosiliciumverbindungen (A) und (B) und der gegebenenfalls verwendeten Alkohole (D) eingesetzt.

Bei dem erfindungsgemäßen Verfahren werden Katalysatoren (C) vorzugsweise in Mengen von 1 bis 1000 Gew.-ppm, bevorzugt 10 bis 400 Gew.-ppm, besonders bevorzugt 30 bis 200 Gew.-ppm, jeweils bezogen auf das Gesamtgewicht der Organosiliciumverbindungen (A) und (B) und der gegebenenfalls verwendeten Alkohole (D) eingesetzt.

Bevorzugt wird Natriumhydroxid in Mengen von 10 bis 400 Gew.-ppm, besonders bevorzugt 30 bis 200 Gew.-ppm, bezogen auf das Gesamtgewicht der Organosiliciumverbindungen (A) und (B) und der gegebenenfalls verwendeten Alkohole (D) eingesetzt.

Beispiele für Alkohole (D) sind Methanol und unter Synthesebedingungen nichtflüchtige, bei Raumtemperatur flüssige $C_6$- bis $C_{14}$-Alkohole, wie n-Hexanol, n-Heptanol, n-Octanol, 2-Ethylhexanol, n-Decanol, n-Dodecanol, besonders bevorzugt aus einer kommerziell verfügbaren Mischung aus $C_{10}$- bis $C_{12}$-Alkoholen; und Monoalkylglykolether, vorzugsweise Addukte von Alkohol, Ethylenoxid, Propylenoxid und deren Mischpolymerisaten, wie 2-Methoxypropanol, 2-Butoxyethanol, oder ein polyethoxylierter Fettalkohol, bevorzugt Diethylenglykolmonobutylether, Dipropylenglykolmonomethylether, n-Hexylglykol, Propylenglykolmonobutylether, oder ein Isotridecylalkoholethoxylat mit bis zu 3 Ethylenoxideinheiten. Besonders bevorzugt sind Diethylenglykolmonobutylether und Dipropylenglykolmonomethylether.

Werden Alkohole (D) bei dem erfindungsgemäßen Verfahren mitverwendet, wird deren Einsatzmenge durch die zu erreichende Zielviskosität der erfindungsgemäßen aminofunktionellen Organopolysiloxane bestimmt. Alkohole (D) werden vorzugsweise in Mengen von 0 bis 50 Gew.%, bevorzugt 0,1 bis 5 Gew.-%, jeweils bezogen auf das Gesamtgewicht der Organosiliciumverbindungen (A) und (B) und der verwendeten Alkohole (D), eingesetzt.

Werden keine Alkohole (D) bei dem erfindungsgemäßen Verfahren mitverwendet, wird die zu erreichende Zielviskosität der erfindungsgemäßen aminofunktionellen Organopolysiloxane vorzugsweise über die Katalysatormenge, das Vakuum und die Desaktivierung des Katalysators nach Erreichen der Zielviskosität gesteuert. Gegebenenfalls kann der Viskositätsverlauf durch eine Inline-Viskositätsmessung überwacht werden.

Das erfindungsgemäße Verfahren kann in Anwesenheit oder in Abwesenheit von organischen Lösungsmitteln durchgeführt werden. Beispiele für geeignete Lösungsmittel sind Alkohole, wie Methanol, Ethanol, n- Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon; Schwefelkohlenstoff und Nitrobenzol, oder Gemische dieser Lösungsmittel.

Die Bezeichnung Lösungsmittel bedeutet nicht, dass sich alle Reaktionskomponenten in diesem lösen müssen.

Die Reaktion kann auch in einer Suspension oder Emulsion eines oder mehrerer Reaktionspartner durchgeführt werden.

Die Umsetzung erfolgt bevorzugt bei einer Temperatur von 80 - 85°C. Die Reaktionszeiten betragen vorzugsweise 10 bis 180 Minuten, bevorzugt 30 bis 90 Minuten.

Zur Deaktivierung des basischen Katalysators (C) werden am Ende der Reaktion Neutralisationsmittel, die mit den basischen Katalysatoren produktlösliche Salze bilden eingesetzt. Beispiele für solche Neutralisationsmittel sind langkettige bei Raumtemperatur flüssige Carbonsäuren, wie n-Octansäure, 2-Ethylhexansäure, n-Nonansäure und Ölsäure, Kohlensäureester wie Propylencarbonat, oder Carbonsäureanhydride wie Octenylbernsteinsäureanhydrid.

Weitere Beispiele sind Triorganosilylphosphate, vorzugsweise Trimethylsilylphosphate. Bevorzugt werden als Trimethylsilyphosphate dabei Zusammensetzungen bestehend im wesentlichen aus

| 0- 50% | Monosilylphosphat der Formel: | $[(CH_3)_3SiO](HO)_2P=O$ |
| 20-100% | Disilylphosphat der Formel: | $[(CH_3)_3SiO]_2(HO)P=O$ |
| 0- 70% | Trisilylphosphat der Formel: | $[(CH_3)_3SiO]_3P=O$ |

wobei die Gesamtmenge 100 Gew.-% beträgt, eingesetzt.

Verfahren zur Herstellung der Triorganosilylphosphate, insbesonders Trimethylsilylphosphate, sind in der eingangs erwähnten US 5,041,586 beschrieben.

Die nötige Menge an erfindungsgemäßen Neutralisationsmitteln, bevorzugt Trimethylsilylphosphaten, richtet sich nach der eingesetzten Menge an basischen Katalysatoren und beträgt vorzugsweise 0,05 bis 0,50 Gew-%, bevorzugt 0,15 bis 0,30 Gew.-%, jeweils bezogen auf das Gesamtgewicht der eingesetzten Organosiliciumverbindungen (A) und (B) und der gegebenenfalls verwendeten Alkohole (D). Die Neutralisation kann dabei vor oder nach dem Abkühlen der Reaktionsmischung erfolgen.

Das erfindungsgemäße Verfahren kann diskontinuierlich, halbkontinuierlich oder vollkontinuierlich durchgeführt werden.

Das erfindungsgemäße Verfahren hat den Vorteil, dass es unter milden Reaktionsbedingungen, wie niedrigen Temperaturen, durchgeführt wird und die Reaktionszeiten nicht sehr lang sind. Das erfindungsgemäße Verfahren hat daher den Vorteil energie- und zeitsparend zu sein. Insbesondere hat es den Vorteil, dass vorzugsweise weniger als 2 Gew.-% cyclische Organopolysiloxane gebildet werden. Weiterhin hat es den Vorteil, dass die nach dem erfindungsgemäßen Verfahren erhaltenen Produkte lagerstabil sind, also keine Erhöhung der Viskosität nach Lagerung eintritt, die Produkte nicht trüb werden und auch keine salzartigen Ausfällungen entstehen.

Die Verwendung von Alkoholen (D) bei dem erfindungsgemäßen Verfahren hat den Vorteil, dass über deren Einsatzmenge die Viskosität der Endprodukte, der aminofunktionellen Organopolysiloxane, gesteuert werden kann.

Bevorzugte aminofunktionelle Organopolysiloxane, die nach dem erfindungsgemäßen Verfahren erhalten werden, sind dabei lineare und/oder T-verzweigte Organopolysiloxane, besonders bevorzugt sind lineare Organopolysiloxane die $C_1$- bis $C_{30}$- Alkoxy- oder Monoalkylglykolethergruppen und/oder Hydroxy- und/oder Alkylendgruppen oder im Falle von a = 2 Endgruppen Q der allgemeinen Formel (II), aufweisen.

Die Art der Endgruppen pro Organopolysiloxankette kann dabei gleich oder verschieden sein.

Vorzugsweise beträgt das Verhältnis der Siloxaneinheiten der allgemeinen Formel (VII) zu den Siloxaneinheiten der allgemeinen Formel (VIII) 1 : 10 bis 1 : 30 000, insbesondere 1 : 20 bis 1 : 700.

Die Amingehalte der aminofunktionellen Organopolysiloxane betragen vorzugsweise 0,001 bis 2 mequiv/g gemessen als Verbrauch an 1 n Salzsäure in ml pro g aminofunktionelles Organopolysiloxan bei der Titration bis zum Neutralpunkt.

Die erfindungsgemäßen aminofunktionellen Organopolysiloxane haben vorzugsweise eine durchschnittliche Viskosität von 50 bis 100 000 mPas bei 25°C, bevorzugt 100 bis 25 000 mPas bei 25°C.

Bevorzugt werden nach dem erfindungsgemäßen Verfahren als aminofunktionelle Organopolysiloxane solche der allgemeinen Formel

$$ZR_2SiO(R_2SiO)_k(RQSiO)_lSiR_2Z \qquad (XII)$$

wobei R, Q und Z die oben dafür angegebene Bedeutung haben,

k eine ganze Zahl von 50 bis 700 bedeutet,

l eine ganze Zahl von 1 bis 60 bedeutet, erhalten.

Im Rahmen dieser Erfindung soll Formel (XII) so verstanden werden, dass k Einheiten -(R$_2$SiO)- und l Einheiten -( RQSiO)-in beliebiger Weise, beispielsweise als Block oder statistisch, im Organopolysiloxanmolekül verteilt sein können.

Innerhalb bzw. entlang der Siloxankette der Siloxane der oben angegebenen Formel können, was durch derartige Formeln üblicherweise nicht dargestellt wird, zusätzlich zu den Diorganosiloxaneinheiten R$_2$SiO noch andere Siloxaneinheiten vorliegen. Beispiele für solche anderen, meist nur als Verunreinigung vorliegenden Siloxaneinheiten sind solche der Formeln $RSiO_{3/2}$, $R_3SiO_{1/2}$ und $SiO_2$, wobei R die oben dafür angegebene Bedeutung hat.

Werden bei dem erfindungsgemäßen Verfahren keine Alkohole (D) eingesetzt, ist der Rest Z in Formel (XII) ein Rest der Formel (X), vorzugsweise ein Hydroxyl- und/oder Methoxyrest.

Werden bei dem erfindungsgemäßen Verfahren Alkohole (D) eingesetzt, sind mindestens ein Teil der Reste Z (Iso-) Oxyalkylreste der Formel (X'), vorzugsweise Alkoxy- oder Monoalkylglykoletherreste, bevorzugt $C_{10}$-$C_{12}$-Alkoxyreste, neben Resten der Formel (X), die vorzugsweise Hydroxyl- und/oder Methoxyreste sind.

Gegenstand der Erfindungen sind daher aminofunktionelle Organopolysiloxane der allgemeinen Formel

$$ZR_2SiO (R_2SiO)_k(RQSiO)_lSiR_2Z \qquad (XII)$$

wobei R und Q die oben dafür angegebene Bedeutung haben,

Z einen Rest der allgemeinen Formel

—$OR^1$ (X) und/oder -$[O(CHR^2)_p]_mOR^3$ (X') ,

bedeuten, wobei $R^1$, $R^2$, $R^3$, p und m die oben dafür angegebene Bedeutung haben,

k eine ganze Zahl von 50 bis 700 bedeutet,

l eine ganze Zahl von 1 bis 60 bedeutet, mit der Maßgabe, dass mindestens ein Teil der Reste Z Reste der Formel (X') sind, wobei m gleich 0 ist und $R^3$ ein $C_{10}$-$C_{12}$-Alkylrest ist, also $C_{10}$-$C_{12}$-Alkoxyreste sind.

Die $C_{10}$—$C_{12}$—Alkohole, die bei der Herstellung der oben genannten aminofunktionellen Organopolysiloxane eingesetzt werden, haben den Vorteil, dass sie bei Raumtemperatur flüssig sind.

Acylgruppenhaltige Produkte können durch den Einsatz acylierter aminofunktioneller Silane (A) hergestellt werden, oder durch Umsetzung des erfindungsgemäßen Aminoorganopolysiloxans mit Acylierungsreagenzien, wie Carbonsäureanhydriden, Carbonsäureestern, Carbonsäuren, Lactonen oder Carbonaten.

Die erfindungsgemäßen aminofunktionellen Organopolysiloxane können als Mittel zur Behandlung von Leder, Vliesstoffen, Cellulose, Fasern, Textilien, NonWovens und Tissues, als Bestandteil von Entschäumerformulierungen, als Netzmittel, als Lackadditiv, als PU-Schaumstabilisator, im Bereich der Körperpflege als Wirkstoff in Haarkuren, Shampoos und Hautpflegemitteln, sowie als Bestandteil von Polier- und Beschichtungsmitteln verwendet werden.

Die aminofunktionellen Organopolysiloxane können gelöst in organischen Lösemitteln oder dispergiert in Wasser, vorzugsweise in Form wässriger Emulsionen verwendet werden. Dabei können die aminofunktionellen Organopolysiloxane in der freien Aminform oder in Salzform, wie beispielsweise als Chloridsalz oder Carboxylatsalz durch Zusatz von Salzsäure oder der entsprechenden Carbonsäure, zum Einsatz kommen.

Zusammensetzungen, die die aminofunktionellen Organopolysiloxane enthalten, können weitere Zutaten enthalten, wie Tenside, Verdicker, die Rheologie verändernde Additive, Parfüme, Wachse, Weichmacher, Reinigungsmittel, Schmieröle, Elektrolyte, Aromastoffe, Biozide, pharmazeutische oder kosmetische Wirkstoffe.

Vergleichsversuch 1

Eine Mischung aus 1717,6 g eines OH-endständigen Polydimethylsiloxans mit einer Viskosität von 80 mPas bei 25°C, 50,0 g N-(Aminoethyl-)aminopropyldimethoxymonomethylsilan und 35,5 g Diethylenglykolmonobutylether wird unter Rühren mit 1,8 g einer 20%igen Lösung von Kaliumhydroxid in Methanol versetzt und unter Stickstoff und bei 100 mbar auf 85°C erhitzt. Dabei wird in der Reaktionsmischung befindliches Methanol ausdestilliert. Bei Erreichen von 85°C werden Temperatur und Vakuum solange beibehalten, bis kein Viskositätsanstieg mehr erfolgt. Nach 120 Minuten wird mit 2,4 g eines Gemisches an Trimethylsilylphosphaten der Zusammensetzung

3 Gew.-% Mono-(trimethylsilyl)-phosphat,
74 Gew.-% Bis-(trimethylsilyl)-phosphat und
23 Gew.-% Tris-(trimethylsilyl)-phosphat,

neutralisiert und die Beheizung beendet. Das klare farblose Öl hat eine Viskosität von 1463 mPas bei 25°C.
Die Ergebnisse bei der Bestimmung der Lagerviskositäten und des D4 Cyclengehaltes sind in der Tabelle zusammengefasst. Das Endprodukt ist lagerstabil und weist einen niedrigen D4 Cyclengehalt auf.

Beispiel 1

Eine Mischung aus 1717,6 g eines OH-endständigen Polydimethylsiloxans mit einer Viskosität von 80 mPas bei 25°C, 50,0 g N-(Aminoethyl-)aminopropyldimethoxymonomethylsilan und 35,5 g Diethylenglykolmonobutylether wird unter Rühren mit 1,8 g einer 20%igen Lösung von Natriumhydroxid in Methanol versetzt und unter Stickstoff und bei 100 mbar auf 85°C erhitzt. Dabei wird in der Reaktionsmischung befindliches Methanol ausdestilliert. Bei Erreichen von 85°C werden Temperatur und Vakuum solange beibehalten, bis kein Viskositätsanstieg mehr erfolgt. Nach 70 Minuten wird mit 3,5 g des in Vergleichsversuch 1 Gemisches an Trimethylsilylphosphaten neutralisiert und die Beheizung beendet. Das klare farblose Öl hat eine Viskosität von 1828 mPas bei 25°C.
Die Ergebnisse bei der Bestimmung der Lagerviskositäten und des D4 Cyclengehaltes sind in der Tabelle zusammengefasst. Das Endprodukt ist lagerstabil und weist einen niedrigen D4 Cyclengehalt auf.

Beispiel 2

Eine Mischung aus 1717,6 g eines OH-endständigen Polydimethylsiloxans mit einer Viskosität von 80 mPas bei 25°C, 50,0 g N-(Aminoethyl-)aminopropyldimethoxymonomethylsilan und 35,2 g Dipropylenglykolmonomethylether wird unter Rühren mit 1,8 g einer 20%igen Lösung von Natriumhydroxid in Methanol versetzt und unter Stickstoff und bei 100 mbar auf 85°C erhitzt. Dabei wird in der Reaktionsmischung befindliches Methanol ausdestilliert. Bei Erreichen von 85°C werden Temperatur und Vakuum solange beibehalten, bis kein Viskositätsanstieg mehr erfolgt. Nach 70 Minuten wird mit 3,5 g des in vergleichsversuch 1 genannten Gemisches an Trimethylsilylphosphaten neutralisiert und die Beheizung beendet. Das klare farblose Öl hat eine Viskosität von 3240 mPas bei 25°C.

Die Ergebnisse bei der Bestimmung der Lagerviskositäten und des D4 Cyclengehaltes sind in der Tabelle zusammengefasst. Das Endprodukt ist lagerstabil und weist einen niedrigen D4 Cyclengehalt auf.

Beispiel 3

Eine Mischung aus 1717,6 g eines OH-endständigen Polydimethylsiloxans mit einer Viskosität von 80 mPas bei 25°C, 50,0 g N-(Aminoethyl-)aminopropyldimethoxymonomethylsilan und 37,4 g 2-Ethylhexanol wird unter Rühren mit 1,4 g einer 20%igen Lösung von Natriumhydroxid in Methanol versetzt und unter Stickstoff und bei 100 mbar auf 85°C erhitzt. Dabei wird in der Reaktionsmischung befindliches Methanol ausdestilliert. Bei Erreichen von 85°C werden Temperatur und Vakuum solange beibehalten, bis kein Viskositätsanstieg mehr erfolgt. Nach 80 Minuten wird mit 3,5 g des in vergleichsversuch 1 genannten Gemisches an Trimethylsilylphosphaten neutralisiert und die Beheizung beendet. Das klare farblose Öl hat eine Viskosität von 705 mPas bei 25°C.

Die Ergebnisse bei der Bestimmung der Lagerviskositäten und des D4 Cyclengehaltes sind in der Tabelle zusammengefasst. Das Endprodukt ist lagerstabil und weist einen niedrigen D4 Cyclengehalt auf.

Beispiel 4

Eine Mischung aus 1706,3 g eines OH-endständigen Polydimethylsiloxans mit einer Viskosität von 80 mPas bei 25°C, 50,0 g N-(Aminoethyl-)aminopropyldimethoxymonomethylsilan und 37,4 g NAFOL® 1012 (Alkoholmischung aus $C_{10}$- und $C_{12}$-Alkoholen, käuflich erwerblich bei der Firma SASOL) wird unter Rühren mit 1,4 g einer 20%igen Lösung von Natriumhydroxid in Methanol versetzt und unter Stickstoff und bei 100 mbar auf 85°C erhitzt. Dabei wird in der Reaktionsmischung befindliches Methanol ausdestilliert. Bei Erreichen von 85°C werden Temperatur und Vakuum für 90 Minuten beibehalten. Danach wird mit 3,5 g des in vergleichsversuch 1 genannten Gemisches an Trimethylsilylphosphaten neutralisiert und die Beheizung beendet. Das klare farblose Öl hat eine Viskosität von 1255 mPas bei 25°C. Die Ergebnisse bei der Bestimmung der Lagerviskositäten und des D4 Cyclengehaltes sind in der Tabelle zusammengefasst. Das Endprodukt ist lagerstabil und weist einen niedrigen D4 Cyclengehalt auf.

Beispiel 5

Eine Mischung aus 1745,8 g eines OH-endständigen Polydimethylsiloxans mit einer Viskosität von 80 mPas bei 25°C und 50,9 g N-(Aminoethyl-)aminopropyldimethoxymonomethylsilan wird unter Rühren mit 0,9 g einer 20%igen Lösung von Natriumhydroxid in Methanol versetzt und unter Stickstoff und bei 500 mbar auf 80°C erhitzt. Dabei wird in der Reaktionsmischung befindliches Methanol teilweise ausdestilliert. Bei Erreichen von 80°C werden Temperatur und Vakuum für 90 Minuten beibehalten. Danach wird mit 3,4 g des in vergleichsversuch 1 genannten Gemisches an Trimethylsilylphosphaten neutralisiert und die Beheizung beendet. Das klare farblose Öl hat eine Viskosität von 911 mPas bei 25°C.

Die Ergebnisse bei der Bestimmung der Lagerviskositäten und des D4 Cyclengehaltes sind in der Tabelle zusammengefasst. Das Endprodukt ist lagerstabil und weist einen niedrigen D4 Cyclengehalt auf.

Vergleichsversuch 2 unter basischer Katalyse:

Die Arbeitsweise von Beispiel 6 wird wiederholt mit der Abänderung, dass die Umsetzung bei 120°C und 100 mbar anstelle von 80°C und 500 mbar erfolgt. Es wird ein klares farbloses Öl mit einer Viskosität von 2920 mPas bei 25°C erhalten.

Die Ergebnisse bei der Bestimmung des D4 Cyclengehaltes sind in der Tabelle zusammengefasst. Der D4 Cyclengehalt hat sich im Vergleich zu Beispiel 6 stark erhöht.

Vergleichsversuch 3 unter saurer Katalyse:

Eine Mischung aus 1717,6 g eines OH-endständigen Polydimethylsiloxans mit einer Viskosität von 80 mPas bei 25°C, 50,0 g N-(Aminoethyl-)aminopropyldimethoxymonomethylsilan und 32,6 g 1-Dodecanol wird unter Rühren mit 9,0 g Eisessig versetzt und unter Stickstoff und bei 100 mbar auf 80°C erhitzt. Dabei wird in der Reaktionsmischung befindliches Methanol ausdestilliert. Bei Erreichen von 80°C werden Temperatur und Vakuum für 180 Minuten beibehalten, danach wird das Vakuum mit Stickstoff gebrochen und auf Raumtemperatur abgekühlt. Das klare gelbstichige Öl hat eine Viskosität von 1780 mPas bei 25°C.

Die Ergebnisse bei der Bestimmung der Lagerviskositäten und des D4 Cyclengehaltes sind in der Tabelle zusammengefasst.

Die Viskosität steigt bei Lagerung stark an, das Endprodukt ist also nicht lagerstabil.

Tabelle: Bestimmung der Lagerviskositäten und D4-Cyclengehalte

| Produkt aus Beispiel | Viskosität unmittelbar nach der Herstellung in mPas[*] | Viskosität nach 26 Tagen Lagerung bei Raumtemperatur in mPas[*] | Viskosität nach 26 Tagen Lagerung bei 50°C in mPas[*] | Gehalt an Cyclen D4 in Mol% Si aus $^{29}$Si-NMR |
|---|---|---|---|---|
| Vergleichsversuch 1 | 1463 | 1581 | 1827 | 1,85 |
| 1 | 1828 | 1906 | 2170 | 1,49 |
| 2 | 3240 | 3039 | 2986 | 1,43 |
| 3 | 705 | 684 | 697 | 1,16 |
| 4 | 1255 | 1131 | 1086 | 0,73 |
| 5 | 911 | 1070 | 1450 | 0,26 |
| Vergleichsversuch 2 | 2920 | Nicht bestimmt | Nicht bestimmt | 5,92 |
| Vergleichsversuch 3 | 1780 | 12550 | 11000 | < 0,05 |
| * bei 25°C | | | | |

**Patentansprüche**

1. Verfahren zur Herstellung von aminofunktionellen Organopolysiloxanen enthaltend

   (i) Vermischen von Aminosilanen (A) der allgemeinen Formel

   $$R_aQ_bSi(OR^1)_{4-(a+b)} \qquad (I),$$

   wobei R gleich oder verschieden sein kann, und ein Wasserstoffatom oder einen einwertigen, gegebenfalls Fluor-, Chlor- oder Brom-substituierten $C_1$- bis $C_{18}$-Kohlenwasserstoffrest bedeutet,

   $R^1$ ein Wasserstoffatom oder einen $C_1$- bis $C_4$-Alkylrest, der durch ein Ethersauerstoffatom substituiert sein kann, bedeutet,
   a 0, 1 oder 2,
   b 1, 2 oder 3,

   mit der Maßgabe, dass die Summe aus a+b $\leq$ 3 ist,

   Q bedeutet eine Gruppe der allgemeinen Formel

   $$-R^5-[NR^6(CH_2)_n]_eN(R^6)_2 \qquad (II),$$

   wobei $R^5$ einen zweiwertigen, linearen oder verzweigten $C_1$- bis $C_{18}$-Kohlenwasserstoffrest bedeutet,

   $R^6$ gleich oder verschieden sein kann, und ein Wasserstoffatom, einen gegebenenfalls Fluor-, Chlor-, Brom-, Hydroxy- oder $C_1$- bis $C_5$-alkoxy-substituierten $C_1$- bis $C_{18}$-Kohlenwasserstoffrest oder Acylrest bedeutet,
   e 0, 1, 2, 3 oder 4,
   n 2, 3, 4, 5 oder 6 ist,

   mit Organosiliciumverbindungen (B) ausgewählt aus der Gruppe von
   Siloxanen (B') aus Einheiten der allgemeinen Formel

   $$R_d(OR^1)_fSiO_{\frac{4-(d+f)}{2}} \qquad (III) \text{ und}$$

und

$$R_cSiO_{\frac{4-c}{2}} \qquad (IV)$$

und Silanen (B'') der allgemeinen Formel

$$R_cSi(OR^1)_{4-c} \qquad (V),$$

wobei R und $R^1$ die oben dafür angegebene Bedeutung haben,

c 0, 1, 2, oder 3,
d 0, 1 oder 2,
f 1, 2, oder 3,

mit der Maßgabe, dass die Summe aus d+f $\leq$ 3 ist,
basischen Katalysatoren (C) ausgewählt aus der Gruppe von Natriumhydroxid, Natriummethanolat, Natriumethanolat und Natriumsiloxanolat,
und gegebenenfalls Alkoholen (D) der allgemeinen Formel

$$H\text{-}[O(CHR^2)_p]_mOR^3 \qquad (VI),$$

wobei $R^2$ gleich oder verschieden sein kann, und ein Wasserstoffatom oder einen $C_1$- bis $C_{18}$-Kohlenwasser-stoffrest bedeutet,

$R^3$ ein Wasserstoffatom, einen $C_1$- bis $C_{30}$-Kohlenwasserstoffrest oder eine Gruppe der allgemeinen Formel - (C=O)-$R^4$, wobei $R^4$ ein Rest $R^2$ oder O-$R^2$ ist, bedeutet,
p 2, 3 oder 4,
m 0 oder eine ganze Zahl von 1 bis 100 ist,

(ii) Umsetzung der Mischung durch Erhitzen auf 70 bis 100°C, wobei bei Mitverwendung von Alkoholen (D) die Umsetzung (ii) bei einem Druck von 1 bis 200 hPa und ohne Mitverwendung von Alkoholen (D) die Umsetzung (ii) bei einem Druck von 300 bis 700 hPa durchgeführt wird, und
(iii) anschließend an die Umsetzung (ii) Neutralisation der basischen Katalysatoren durch Zugabe von Neutralisationsmittel, die mit den basischen Katalysatoren Salze bilden, die in den so erhaltenen aminofunktionellen Organopolysiloxanen löslich sind.

2. Verfahren nach Anspruch 1, **dadurch gekennzeichnet, dass** die Umsetzung (ii) bei 70 bis 90°C erfolgt.

3. Verfahren nach Anspruch 1 oder 2, **dadurch gekennzeichnet, dass** Natriumhydroxid (C) in Mengen von 30 bis 200 Gew.-ppm, bezogen auf das Gesamtgewicht der Organosiliciumverbindungen (A) und (B) und der gegebenenfalls verwendeten Alkohole (D) eingesetzt wird.

4. Verfahren nach einem der Ansprüche 1 bis 3, **dadurch gekennzeichnet, dass** bei der Neutralisation (iii) als Neutralisationsmittel Triorganosilylphosphate eingesetzt werden.

5. Verfahren nach Anspruch 4, **dadurch gekennzeichnet, dass** als Triorganosilylphosphate Trimethylsilylphosphate eingesetzt werden.

6. Verfahren nach Anspruch 5, **dadurch gekennzeichnet, dass** als Trimethylsilylphosphate Zusammensetzungen bestehend im wesentlichen aus

| | | |
|---|---|---|
| 0- 50% | Monosilylphosphat der Formel: | $[(CH_3)_3SiO](HO)_2P{=}O$ |
| 20-100% | Disilylphosphat der Formel: | $[(CH_3)_3SiO]_2(HO)P{=}O$ |
| 0- 70% | Trisilylphosphat der Formel: | $[(CH_3)_3SiO]_3P{=}O$ |

wobei die Gesamtmenge 100 Gew.-% beträgt, eingesetzt werden.

7. Verfahren nach einem der Ansprüche 1 bis 6, **dadurch gekennzeichnet, dass** als Organosiliciumverbindung (B) Siloxane (B') der allgemeinen Formel

$$R^1OR_2SiO(R_2SiO)_xSiR_2OR^1 \qquad (XI)$$

wobei R und $R^1$ die im Anspruch 1 dafür angegebene Bedeutung haben und x eine ganze Zahl von 20 bis 100 bedeutet, eingesetzt werden.

8. Verfahren nach einem der Ansprüche 1 bis 7, **dadurch gekennzeichnet, dass** $R^1$ ein Wasserstoffatom oder ein Methylrest ist.

9. Verfahren nach einem der Ansprüche 1 bis 8, **dadurch gekennzeichnet, dass** als Aminosilan (A) solches der allgemeinen Formel

$$NH_2(CH_2)_2NH(CH_2)_3SiCH_3(OCH_3)_2$$

eingesetzt wird.

10. Verfahren nach einem der Ansprüche 1 bis 9, **dadurch gekennzeichnet, dass** als Alkohol (D) ein $C_6$- bis $C_{14}$-Alkohol oder ein Monoalkylglykolether eingesetzt wird.

11. Verfahren nach einem der Ansprüche 1 bis 10, **dadurch gekennzeichnet, dass** als Alkohol (D) ein Gemisch aus $C_{10}$-bis $C_{12}$-Alkoholen eingesetzt wird.

**Claims**

1. Process for preparing amino-functional organopolysiloxanes comprising

(i) mixing aminosilanes (A) of the general formula

$$R_aQ_bSi(OR^1)_{4-(a+b)} \qquad (I),$$

where each R may be the same or different and represents a hydrogen atom or a monovalent unsubstituted or fluorine-, chlorine- or bromine-substituted $C_1$- to $C_{18}$-hydrocarbyl radical,

$R^1$ represents a hydrogen atom or a $C_1$- to $C_4$-alkyl radical which may be substituted by an ether oxygen atom,
a is 0, 1 or 2,
b is 1, 2 or 3,

with the proviso that the sum total of a+b is $\leq 3$,

Q represents a group of the general formula

$$-R^5-[NR^6(CH_2)_n]_eN(R^6)_2 \qquad (II),$$

where $R^5$ is a bivalent linear or branched $C_1$- to $C_{18}$-hydrocarbyl radical,
each $R^6$ may be the same or different and represents a hydrogen atom, an unsubstituted or fluorine-, chlorine-, bromine-, hydroxyl- or $C_1$-$C_5$-alkoxy-substituted $C_1$- to $C_{18}$-hydrocarbyl radical or acyl radical,

e is 0, 1, 2, 3 or 4,
n is 2, 3, 4, 5 or 6,

with organosilicon compounds (B) selected from the group consisting of
siloxanes (B') comprising units of the general formula

$$R_d(OR^1)_f SiO_{\frac{4-(d+f)}{2}} \quad \text{(III) and}$$

and

$$R_c SiO_{\frac{4-c}{2}} \quad \text{(IV)}$$

and silanes (B") of the general formula

$$R_c Si(OR^1)_{4-c} \quad \text{(V)},$$

where R and $R^1$ are each as defined above,

c is 0, 1, 2 or 3,
d is 0, 1 or 2,
f is 1, 2 or 3,

with the proviso that the sum total of d+f is $\leq 3$,
basic catalysts (C) selected from the group consisting of sodium hydroxide, sodium methanolate, sodium ethanolate and sodium siloxanolate,
and if appropriate alcohols (D) of the general formula

$$H-[O(CHR^2)_p]_m OR^3 \quad \text{(VI)},$$

where each $R^2$ may be the same or different and represents a hydrogen atom or a $C_1$- to $C_{18}$-hydrocarbyl radical,

$R^3$ represents a hydrogen atom, a $C_1$- to $C_{30}$ hydrocarbyl radical, or a group of the general formula -(C=O)-$R^4$, where $R^4$ is an $R^2$ or O-$R^2$ radical,
p is 2, 3 or 4, and
m is 0 or an integer from 1 to 100,

(ii) reacting the mixture by heating to 70 - 100°C, said reacting (ii) being carried out at a pressure in the range from 1 to 200 hPa when alcohols (D) are used and in the range from 300 to 700 hPa when alcohols (D) are not used, and
(iii) subsequently to the reaction (ii) neutralizing the basic catalysts by addition of neutralizing agents which combine with the basic catalysts to form salts which are soluble in the amino-functional organopolysiloxanes thus obtained.

2.  Process according to claim 1 **characterized in that** said reacting (ii) is effected at 70 to 90°C.

3.  Process according to claim 1 or 2 **characterized in that** sodium hydroxide (C) is used in amounts from 30 to 200 weight ppm, based on the total weight of said organosilicon compounds (A) and (B) and, if used, of the alcohols (D).

4.  Process according to any one of claims 1 to 3 **characterized in that** triorganosilyl phosphates are used as neutralizing agents in said neutralizing (iii).

5.  Process according to claim 4 **characterized in that** the triorganosilyl phosphates used are trimethylsilyl phosphates.

6.  Process according to claim 5 **characterized in that** the trimethylsilyl phosphates used are compositions consisting essentially of

0- 50%   of monosilyl phosphate of formula:   $[(CH_3)_3 SiO](HO)_2 P=O$

(continued)

| 20-100% | of disilyl phosphate of formula: | $[(CH_3)_3SiO]_2(HO)P{=}O$ |
| 0- 70% | of trisilyl phosphate of formula: | $[(CH_3)_3SiO]_3P{=}O$ |

the total amount being 100% by weight.

7.  Process according to any one of claims 1 to 6 **characterized in that** said organosilicon compound (B) comprises siloxanes (B') of the general formula

$$R^1OR_2SiO(R_2SiO)_xSiR_2OR^1 \qquad (XI)$$

where R and $R^1$ are each as defined in claim 1 and x represents an integer from 20 to 100.

8.  Process according to any one of claims 1 to 7 **characterized in that** $R^1$ is a hydrogen atom or a methyl radical.

9.  Process according to any one of claims 1 to 8 **characterized in that** said aminosilane (A) conforms to the general formula

$$NH_2(CH_2)_2NH(CH_2)_3SiCH_3(OCH_3)_2.$$

10. Process according to any one of claims 1 to 9 **characterized in that** a $C_6$- to $C_{14}$-alcohol or a monoalkyl glycol ether is used as alcohol (D).

11. Process according to any one of claims 1 to 10 **characterized in that** a mixture of $C_{10}$- to $C_{12}$-alcohols is used as alcohol (D).


**Revendications**

1.  Procédé de préparation d'organopolysiloxanes aminofonctionnels comportant les étapes suivantes :

    (i) mélange d'aminosilanes (A) de formule générale :

    $$R_aQ_bSi(OR^1)_{4-(a+b)} \qquad (I),$$

    dans laquelle R peut être identique ou différent et représente un atome d'hydrogène ou un radical hydrocarboné en $C_1$ à $C_{18}$, le cas échéant substitué par du fluor, du chlore ou du brome, monovalent,
    $R^1$ représente un atome d'hydrogène ou un radical alkyle en $C_1$ à $C_4$, qui peut être substitué par un atome d'oxygène d'éther,
    a est 0, 1 ou 2,
    b est 1, 2 ou 3,
    avec la précision que la somme de $a+b \leq 3$,
    Q représente un groupe de formule générale

    $$-R^5\text{-}[NR^6(CH_2)_n]_eN(R^6)_2 \qquad (II),$$

    dans laquelle $R^5$ représente un radical hydrocarboné en $C_1$ à $C_{18}$, linéaire ou ramifié, bivalent,
    $R^6$ peut être identique ou différent et représente un atome d'hydrogène, un radical hydrocarboné en $C_1$ à $C_{18}$, le cas échéant substitué par du fluor, du chlore, du brome, hydroxy ou alcoxy en $C_1$ à $C_5$, ou un radical acyle,
    e est 0, 1, 2, 3 ou 4,
    n est 2, 3, 4, 5 ou 6,
    avec des composés organosilicium (B) choisis parmi des siloxanes (B') constitués d'unités de formule générale

    $$R_d(OR^1)_fSiO_{\frac{4-(d+f)}{2}} \qquad (III) \text{ and}$$

and

$$R_cSiO_{\frac{4-c}{2}} \qquad (IV)$$

et des silanes (B'') de formule générale

$$R_cSi(OR^1)_{4-c} \qquad (V)$$

dans lesquelles R et $R^1$ ont la signification indiquée ci-dessus,
c est 0, 1, 2 ou 3,
d est 0, 1 ou 2,
f est 1, 2 ou 3,
avec la précision que la somme de d+f ≤ 3,
des catalyseurs basiques (C), choisis parmi l'hydroxyde de sodium, le méthanolate de sodium, l'éthanolate de sodium, et le siloxanolate de sodium,
et, le cas échant, des alcools (D) de formule générale

$$H\text{-}[O(CHR^2)_p]_mOR^3 \qquad (VI)$$

dans laquelle $R^2$ peut être identique ou différent et représente un atome d'hydrogène ou un radical hydrocarboné en $C_1$ à $C_{18}$,
$R^3$ représente un atome d'hydrogène, un radical hydrocarboné en $C_1$ à $C_{30}$, ou un groupe de formule générale -(C=O)-$R^4$, dans laquelle $R^4$ représente un radical $R^2$ ou O-$R^2$,
p est 2, 3 ou 4,
m est 0 ou un nombre entier de 1 à 100,
(ii) transformation du mélange par chauffage à 70 à 100°C, la transformation (ii) étant effectuée, lorsqu'on utilise les alcools (D), à une pression de 1 à 200 hPa et, sans utilisation d'alcools (D), à une pression de 300 à 700 hPa, et
(iii) à la suite de la transformation (ii), neutralisation des catalyseurs basiques par addition d'agents de neutralisation qui forment, avec les catalyseurs basiques, des sels qui sont solubles dans les organopolysiloxanes aminofonctionnels ainsi obtenus.

2. Procédé selon la revendication 1, **caractérisé en ce que** la transformation (ii) a lieu à 70 à 90°C.

3. Procédé selon la revendication 1 ou 2, **caractérisé en ce que** l'hydroxyde de sodium (C) est utilisé dans les proportions de 30 à 200 ppm en poids, rapporté au poids total des composés organosilicium (A) et (B) et des alcools (D) le cas échéant utilisés.

4. Procédé selon l'une quelconque des revendications 1 à 3, **caractérisé en ce qu'**on utilise, pour la neutralisation (iii), comme agents de neutralisation, des phosphates de triorganosilyle.

5. Procédé selon la revendication 4, **caractérisé en ce qu'**on utilise, comme phosphates de triorganosilyle, des phosphates de triméthylsilyle.

6. Procédé selon la revendication 5, **caractérisé en ce qu'**on utilise, comme phosphates de triméthylsilyle, des compositions constituées essentiellement de :

0-50% de phosphate de monosilyle de formule :

$$[(CH_3)_3SiO] (HO)_2P=O$$

20-100% de phosphate de disilyle de formule :

$$[(CH_3)_3SiO]_2(HO)P=O$$

0-70% de phosphate de trisilyle de formule :

$$[((CH_3)_3SiO]_3P=O,$$

la quantité totale représentant 100% en poids.

**7.** Procédé selon l'une quelconque des revendications 1 à 6, **caractérisé en ce qu'**on utilise, comme composé organosilicium (B), des siloxanes B' de formule générale :

$$R^1OR_2SiO(R_2SiO)_xSiR_2OR^1 \qquad (XI)$$

dans laquelle R et $R^1$ ont la signification indiquée dans la revendication 1 et x représente un nombre entier de 20 à 100.

**8.** Procédé selon l'une quelconque des revendications 1 à 7, **caractérisé en ce** $R^1$ représente un atome d'hydrogène ou un radical méthyle.

**9.** Procédé selon l'une quelconque des revendications 1 à 8, **caractérisé en ce qu'**on utilise, comme aminosilane (A), un aminosilane de formule générale :

$$NH_2(CH_2)_2NH(CH_2)_3SiCH_3(OCH_3)_2.$$

**10.** Procédé selon l'une quelconque des revendications 1 à 9, **caractérisé en ce qu'**on utilise, comme alcool (D), un alcool en $C_6$ à $C_{14}$ ou un éther de monoalkylglycol.

**11.** Procédé selon l'une quelconque des revendications 1 à 10, **caractérisé en ce qu'**on utilise, comme alcool (D), un mélange d'alcools en $C_{10}$ à $C_{12}$.